# FASCICULE DE BREVET EUROPEEN

(11) **EP 1 026 712 B1**
(45) Date de publication et mention de la délivrance du brevet: **21.06.2006**
(21) Numéro de dépôt: 00410001.2
(22) Date de dépôt: 05.01.2000
(51) Int. Cl.: H01H 9/26

(54) **Installation comportant un appareil électrique de coupure et un interverrouillage à câble**
Anlage mit einem elektrischen Schalter und Verriegelung durch einen Kabel
Installation having an electrical switch and an interlock device by means of a cable

(30) Priorité: 08.02.1999 FR 9901660
(43) Date de publication de la demande: 09.08.2000
(73) Titulaire: SCHNEIDER ELECTRIC INDUSTRIES SAS, 92500 Rueil-Malmaison (FR)
(72) Inventeur: Court, Frédéric, 38050 Grenoble cedex 09 (FR); Gerbert-Gaillard, Alain, 38050 Grenoble cedex 09 (FR)
(74) Mandataire: Broydé, Marc

(56) Documents cités:
- EP-A- 0 855 527
- EP-A- 0 857 881
- WO-A-97/37366
- DE-B- 1 450 988
- US-A- 4 546 666

## Description

L'invention concerne une installation comportant un appareillage électrique de coupure et un câble de transmission du mouvement, destiné à interverrouiller l'appareillage avec un mécanisme extérieur. Plus spécifiquement, l'invention concerne un dispositif de fixation d'un câble de transmission cinématique par rapport à un appareillage électrique de coupure.

Les câbles gainés sont couramment utilisés pour réaliser des interverrouillages entre deux appareillages de coupures tels que des disjoncteurs, comme l'illustre le document US-A-5 726 401, ou bien entre un appareillage de coupure et un dispositif extérieur, par exemple entre un disjoncteur et la porte d'accès à une armoire électrique, comme illustré par le document US-A-4 405 844, ou bien encore pour réaliser des télécommandes mécaniques, comme l'illustre le document EP-A-0 183 931. Ces câbles comportent classiquement une gaine extérieure souple dans laquelle peut coulisser une âme. Outre sa fonction de protection mécanique, la gaine souple offre l'avantage de conserver plus ou moins sa forme une fois fixée, malgré le coulissement interne de l'âme du câble, et permet une grande liberté de positionnement. Un intérêt des câbles gainés par rapport à d'autres dispositifs de transmission cinématique tels que les tringles ou les courroies, réside dans la possibilité d'adapter leur longueur et leur forme sur site, au moment du montage, ce qui laisse une plus grande liberté de positionnement relatif des appareillages à relier.

Pour mettre en place un câble de transmission cinématique gainé entre deux organes mobiles d'une installation électrique, il est nécessaire de fixer un premier tronçon d'extrémité de la gaine par rapport à un élément fixe de l'installation proche du premier organe mobile à relier, de fixer l'autre tronçon d'extrémité de la gaine par rapport à un élément fixe de l'installation proche du deuxième organe mobile à relier, et de fixer les deux extrémités de l'âme chacune par rapport à l'un des organes mobiles à relier, l'ordre des opérations pouvant varier suivant la technique d'installation utilisée.

Habituellement, le montage nécessite une ou plusieurs opérations de vissage car la fixation se fait à l'aide de tiges filetées et d'écrous, comme le montre en particulier le document US-A-5 726 401 déjà cité. L'opération de montage est de ce fait relativement longue et fastidieuse. Les appareillages électriques de coupure étant souvent confinés dans des châssis ou des armoires, l'exiguïté de l'espace d'accès disponible autour des organes mobiles à relier rend le montage encore plus délicat.

L'invention vise donc à faciliter le montage d'une transmission cinématique par câble gainé entre divers éléments d'une installation comportant au moins un appareillage électrique de coupure, sans augmenter l'encombrement global de l'installation. Elle vise également à rendre plus rapide ce montage et à permettre un montage malgré un volume d'accès réduit.

Ces objectifs sont atteints grâce à une installation comportant au moins un appareillage électrique de coupure et un câble de transmission cinématique destiné à interverrouiller un organe mobile de l'appareillage électrique avec un mécanisme extérieur à l'appareillage, l'appareillage électrique de coupure comportant un châssis, le câble de transmission cinématique comportant une gaine flexible et une âme apte à coulisser dans la gaine, la gaine flexible comportant un tronçon d'extrémité constituant une première partie du câble fixé par rapport au châssis de l'appareillage électrique par un premier moyen de fixation, l'âme comportant un tronçon d'extrémité extérieur à la gaine, constituant une deuxième partie du câble fixée au premier organe mobile par un deuxième moyen de fixation, l'un au moins des moyens de fixation comportant un embout coopérant avec la partie correspondante du câble, un logement apte à recevoir l'embout, et des moyens de verrouillage à dépassement de point mort, aptes à s'opposer à l'insertion de l'embout dans le logement lorsque la force exercée sur les moyens de verrouillage dans un sens d'insertion reste inférieure à un seuil d'insertion et à permettre l'insertion de l'embout dans le logement lorsque la force exercée sur les moyens de verrouillage dans un sens d'insertion est supérieure au seuil d'insertion. L'installateur n'a qu'à exercer une force suffisante sur l'embout pour insérer celui-ci dans son logement. L'opération de vissage est supprimée de sorte que le montage peut être effectué d'une main et ne nécessite pas un volume d'accès important. De plus, le dépassement du point mort donne à l'opérateur une sensation tactile de l'enclenchement de la fixation, avant tout contrôle visuel. Le dispositif à interverrouiller peut être de nature quelconque : porte d'accès à l'appareillage, autre appareillage électrique ou télécommande mécanique par exemple. L'appareillage électrique peut être fixe ou embrochable.

Préférentiellement, lesdits moyens de verrouillage sont aptes à s'opposer à l'extraction de l'embout dans le logement lorsque la force exercée sur les moyens de verrouillage dans un sens d'extraction reste inférieure à un seuil d'extraction et à permettre l'extraction de l'embout dans le logement lorsque la force exercée sur les moyens de verrouillage dans un sens d'extraction est supérieure au seuil d'extraction. Ainsi, le démontage est possible dans les mêmes conditions de facilité et de rapidité.

Selon un mode de réalisation, le logement est constitué par deux encoches pratiquées dans deux flasques parallèles d'un support.

Préférentiellement, les moyens de verrouillage comportent un organe de verrouillage apte à prendre une position de déverrouillage permettant d'insérer l'embout dans le logement et une position de verrouillage empêchant d'extraire l'embout du logement, et un moyen de rappel élastique rappelant l'organe de verrouillage vers sa position de verrouillage, l'embout coopérant avec le moyen de rappel élastique de telle manière que l'organe de verrouillage s'efface élastiquement vers sa position de déverrouillage lors de l'insertion en force de l'embout dans le logement. Le verrouillage à dépassement de point mort est réalisé ainsi de façon particulièrement simple. Il est alors également aisé de prévoir que le moyen de rappel élastique coopère avec l'embout de telle manière que l'organe de verrouillage s'efface élastiquement vers sa position de déverrouillage lorsque l'embout est extrait en force du logement.

Avantageusement, l'organe de rappel élastique est un ressort agissant directement sur l'embout. Selon un mode de réalisation préféré, le ressort est muni d'une première rampe et d'une deuxième rampe conformées de telle manière que la première rampe soit apte à coopérer avec l'embout pour effacer l'organe de rappel élastique lors de l'insertion de l'embout, la deuxième rampe étant apte à coopérer avec l'embout pour maintenir celui-ci en position dans son logement. La deuxième rampe est telle qu'elle est apte à coopérer avec l'embout pour effacer l'organe de rappel élastique lors de l'extraction. La première et la deuxième rampe sont conformées de telle manière que le seuil de force d'extraction est plus faible que le seuil de force d'insertion.

Le moyen de fixation tel que décrit ci-dessus servir à la fixation de l'âme du câble à l'organe mobile de l'appareillage électrique. Il peut être également destiner à la fixation de la gaine par rapport au châssis de l'appareillage. Préférentiellement, le premier et le deuxième moyens comportent chacun un embout coopérant avec la partie correspondante du câble, un logement apte à recevoir l'embout, et des moyens de verrouillage à dépassement de point mort, aptes à s'opposer à l'insertion de l'embout dans le logement lorsque la force exercée sur les moyens de verrouillage dans un sens d'insertion reste inférieure à un seuil d'insertion et à permettre l'insertion de l'embout dans le logement lorsque la force exercée sur les moyens de verrouillage dans un sens d'insertion est supérieure au seuil d'insertion.

D'autres avantages et caractéristiques de l'invention ressortiront de la description qui va suivre de deux modes de réalisation de l'invention, donnés à titre d'exemples non limitatifs et représentés aux dessins annexés dans lesquels:
- la figure 1 représente une vue en perspective d'une installation selon un premier mode de réalisation de l'invention, comprenant un appareillage de coupure équipé d'une platine de support d'une transmission cinématique à câble ;
- la figure 2 représente une vue en perspective de la platine de la figure 1 ;
- les figures 3 à 5 représentent schématiquement la transmission cinématique à câble de la figure 1, dans diverses positions ;
- la figure 6 représente le câble muni de moyens de fixation ;
- la figure 7 représente une installation selon un deuxième mode de réalisation de l'invention, comprenant deux appareillages de coupure reliés entre eux par des transmissions cinématiques à câble.

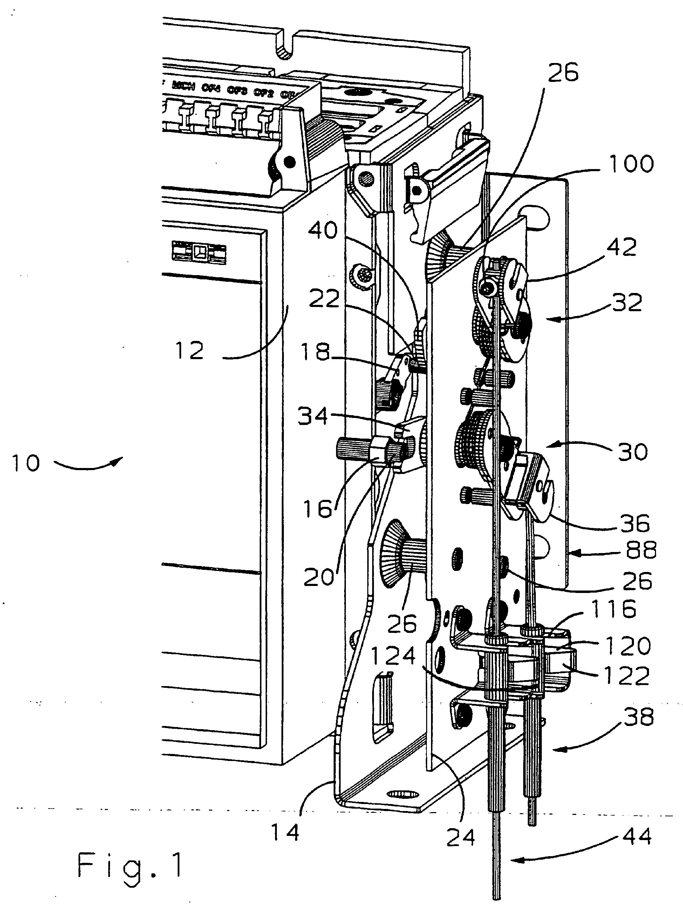

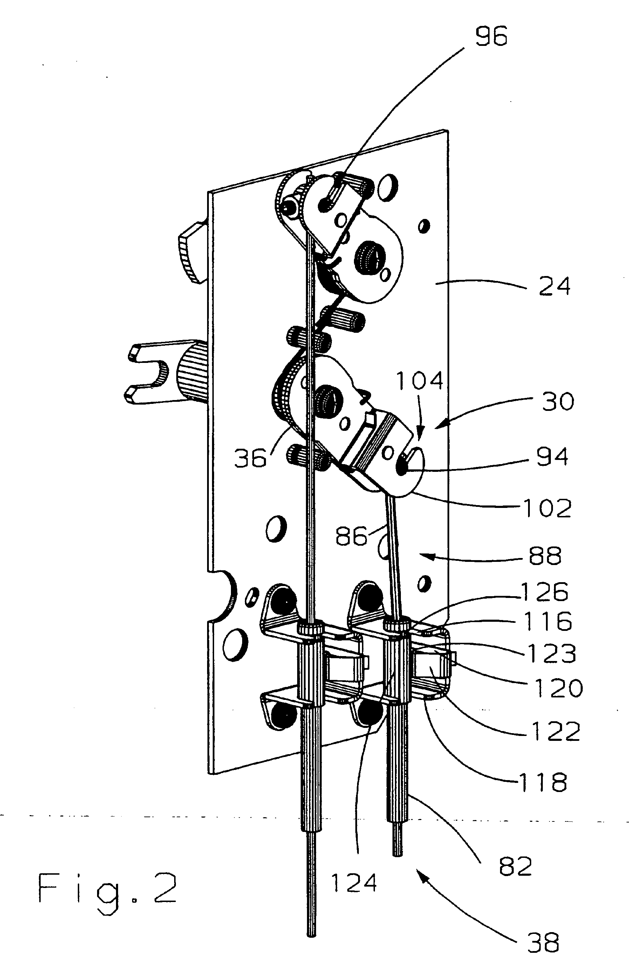

En référence aux figures 1 et 2, un disjoncteur 10 comporte un boîtier 12 avec un flasque latéral 14, au travers duquel sont accessibles de l'extérieur deux leviers 16, 18. Le levier 16 est relié directement à un barreau de commutation de l'appareillage, non représenté. Son extrémité libre est munie d'un téton 20 dont la position reflète la position du barreau, donc la position ouverte ou fermée des pôles du disjoncteur. Le levier 18 est un levier de commande du verrouillage d'un mécanisme d'entraînement du barreau de commutation. Son extrémité libre est munie d'un téton 22 qui est apte à prendre une position verrouillée reflétant un état du mécanisme dans lequel celui-ci ne peut pas agir sur le barreau de commutation de manière à refermer le disjoncteur, de sorte que les pôles du disjoncteur sont verrouillés en position ouverte, et une position déverrouillée dans laquelle le levier n'interfère pas avec le mécanisme, de sorte qu'il est possible d'ouvrir ou de fermer les pôles du disjoncteur 10, par l'intermédiaire d'une commande non représentée. De plus, le levier 18, en passant de sa position déverrouillée à sa position verrouillée, agit sur un verrou de déclenchement de l'ouverture des pôles du disjoncteur. Le levier 18 et son action sur le mécanisme d'entraînement du barreau de commutation sont décrits plus en détail dans la demande de brevet français portant le numéro de dépôt 98 05120.

Une platine 24 est fixée au flasque 14 par trois pieds 26 et supporte deux leviers de transmission 30, 32. Le levier de transmission 30 comporte un bras en fourche 34 agissant sur le téton 20 et un bras 36 relié à un dispositif de transmission cinématique par câble 38. De manière analogue, le levier de transmission 32 comporte un bras 40 agissant sur le téton 22 et un bras 42 relié à un dispositif de transmission cinématique par câble 44.

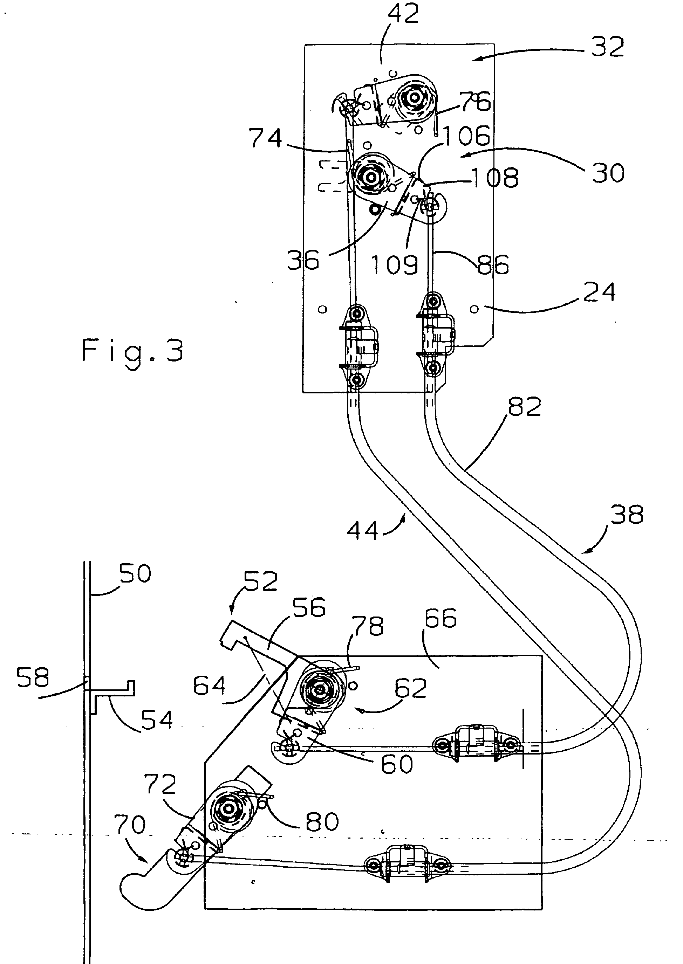

Le disjoncteur 10 se trouve dans une armoire électrique fermée par une porte d'accès 50 représentée schématiquement sur les figures 3 à 5. Un verrou 52, comportant un mentonnet 54 solidaire du battant de la porte 50, dans lequel vient s'insérer un loquet pivotant 56, permet la fermeture de la porte d'accès 50. Le battant comporte un orifice 58 d'accès au mentonnet 54. Le loquet 56 est relié à un bras 60 d'un levier 62 par un ressort de traction 64. Le levier 62 et le loquet 56 ont un axe géométrique de pivotement commun, fixe par rapport à un socle 66 solidaire du chambranle de la porte 50. Par ailleurs, un levier plongeur 70 comporte un bras 72 pivotant autour d'un axe disposé près du rebord du socle 66, de manière que l'extrémité libre du bras 72 se trouve sur le trajet du battant de la porte 50 lors de la fermeture ce celle-ci. Les leviers 30, 32, 62, 70 sont sollicités par des ressorts de rappel de torsion 74, 76, 78, 80.

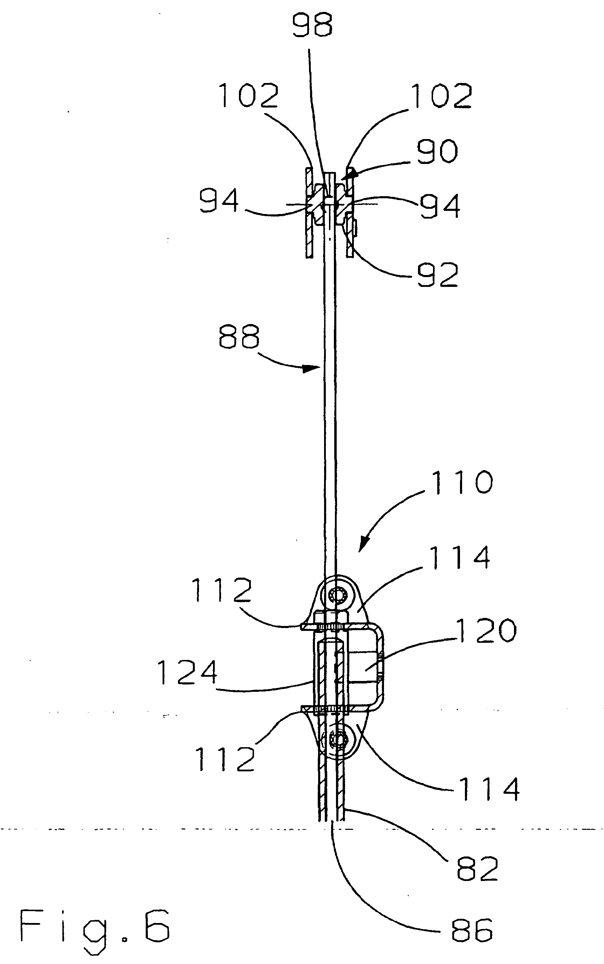

Les deux câbles 38, 44, bien que de fonctions et de longueurs différentes, ont des structures identiques, et des moyens de fixation identiques, si bien que la description de l'un des deux sera suffisante car transposable immédiatement à l'autre. Le câble 38, visible en coupe sur la figure 6, comporte une gaine tubulaire 82 en matériau synthétique flexible servant de guidage pour une âme 86 coulissant axialement dans la gaine. L'âme 86 est relativement souple et ne travaille qu'à la traction. Du côté de chacune de ses extrémités, l'âme 86 du câble comporte un tronçon 88 dépassant de la gaine 82 et muni d'un embout d'accrochage 90. L'embout 90 est constitué par un cylindre médian 92 prolongé à chaque extrémité axiale par un tourillon 94 de plus faible diamètre. Le cylindre médian 92 est muni d'un alésage diamétral permettant le passage de l'extrémité libre de l'âme 86 du câble, et d'un alésage taraudé radial 98 perpendiculaire à l'alésage diamétral et débouchant dans ce dernier, permettant l'insertion d'une vis de serrage 100 représentée sur la figure 1, venant coincer l'âme 86 par rapport à l'embout 90.

L'extrémité libre du levier 30 est constituée par deux flasques parallèles 102 comportant chacun une encoche 104 constituant un palier de logement de l'un des tourillons 94 de l'embout correspondant. Une lame de ressort de flexion 106, visible sur les figures 3 à 5, est fixée au levier 30. Elle comporte une portion d'extrémité conformée en V matérialisant deux rampes 108, 109 et qui, en l'absence de l'embout 90, occupe une partie de l'espace réservé à celui-ci entre les deux flasques 102. Les leviers 32, 62 et 70 sont de constitution identique à celle du levier 30.

La gaine 82 du câble 38 est fixée par ses extrémités à des parties fixes de l'installation. Pour cette fixation sont prévues deux pièces de support en U identiques 110, comportant chacune deux flasques parallèles 112 et deux oreilles de fixation 114. Chacun des flasques 112 comporte une encoche 116, 118 dont le fond constitue un logement, l'encoche 116 étant plus étroite que l'autre. Entre les flasques 112 est disposée une lame ressort 120 dont l'extrémité libre est recourbée en V et forme deux rampes 122, 123. La gaine est munie à ses extrémités d'embouts cylindriques tubulaires 124 munis chacun d'une gorge de positionnement 126. Ces embouts comportent un chambrage au diamètre extérieur de la gaine, prolongé par un alésage de plus faible diamètre, matérialisant une surface d'arrêt de l'extrémité axiale de la gaine 82 et un orifice de passage de l'âme 86. En l'absence de l'embout 124, l'extrémité en V de la lame ressort 120 occupe une partie de l'espace réservé à l'embout entre les deux flasques 112.

Le montage du câble s'effectue de la manière suivante.

L'installateur coupe d'abord le câble 38 à la longueur désirée et prépare sur établi les embouts d'âme 90 et de gaine 124. Les embouts de gaine 124 sont tout d'abord enfilés sur les deux extrémités de la gaine 82, puis chaque extrémité de l'âme 86 est enfilée dans le trou diamétral d'un embout 90, et coincé en vissant la vis 100.

Une fois cette préparation achevée, l'installateur insère les embouts de gaine 124 radialement, c'est à dire perpendiculairement à l'axe de l'embout 124, dans les encoches 116, 118 du support en U 110, la gorge de positionnement 126 coopérant avec l'encoche la plus étroite 116. La rampe 122 du ressort 120 entre en contact avec l'embout 124 et le ressort 120 fléchit. La pointe arrondie de l'extrémité en V 122 constitue un point mort au delà duquel la rampe 123 repousse l'embout dans le logement constitué par le fond des encoches 116, 118.

D'une manière analogue, les tourillons 94 sont insérés dans les encoches 104 en appuyant sur le cylindre 92, qui coopère avec la rampe 108 du ressort en V, de sorte que celle-ci s'efface et permet l'insertion de l'embout 90 jusqu'au fond des encoches 104 qui servent de logement. Dans cette position, la seconde rampe 109 du V du ressort 104 coopère avec le cylindre central de l'embout et maintient l'embout dans son logement.

Le passage des points morts des ressorts 106 et 120, qui nécessite le dépassement d'une force de seuil d'insertion, donne à l'opérateur une indication tactile de l'insertion.

L'extraction s'effectue de manière inverse à l'insertion. Toutefois les rampes des ressorts 106 et 120 sont conformées et disposées de telle manière que la force minimale nécessaire pour l'extraction des embouts soit plus importante que la force minimale nécessaire à leur insertion. Suivant une variante non représentée, on peut prévoir un prolongement de l'extrémité libre des ressort au delà de la partie en V, de manière à former une queue accessible grâce à un outil tel qu'un tournevis. L'installateur n'a qu'à appuyer sur la queue pour contraindre le ressort à s'effacer et permettre le retrait du câble.

Le montage s'effectue de manière analogue pour les deux extrémités du câble 38, et pour celle du câble 44.

Le dispositif installé fonctionne de la manière suivante.

Les ressorts de torsion 74, 76, 78, 80 rappellent les leviers 30, 32, 62, 70 chacun dans un sens permettant de maintenir constamment en tension les âmes des câbles. Le ressort 80 est plus puissant que le ressort 76, de sorte que le levier 70 est maître et le levier 32 esclave. En ce qui concerne le câble 38, les ressorts 74, 78 sont de puissance équivalente. Le levier de transmission 30, piloté par la position du barreau, est maître, et le levier 62 est esclave

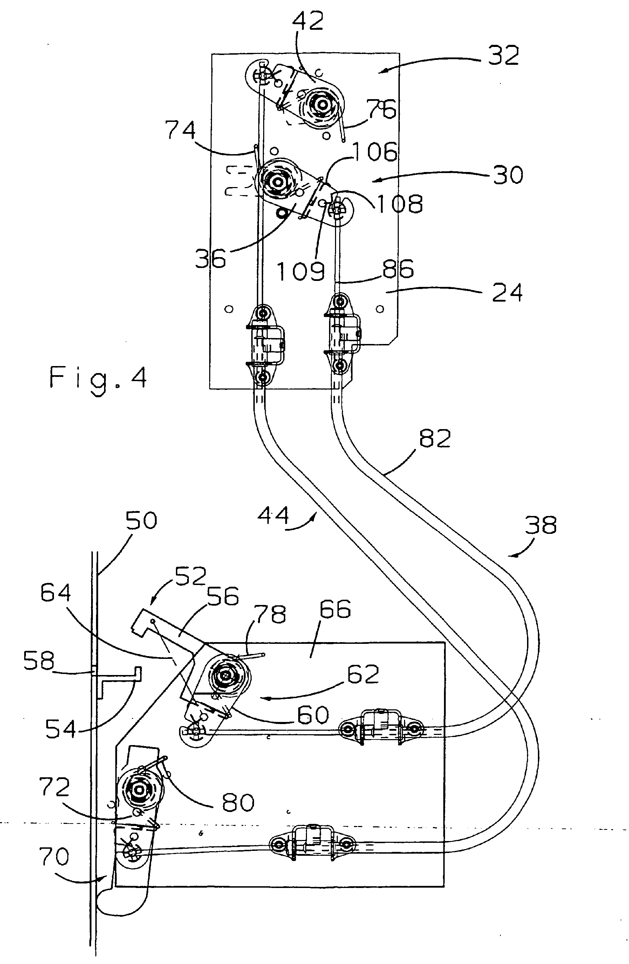

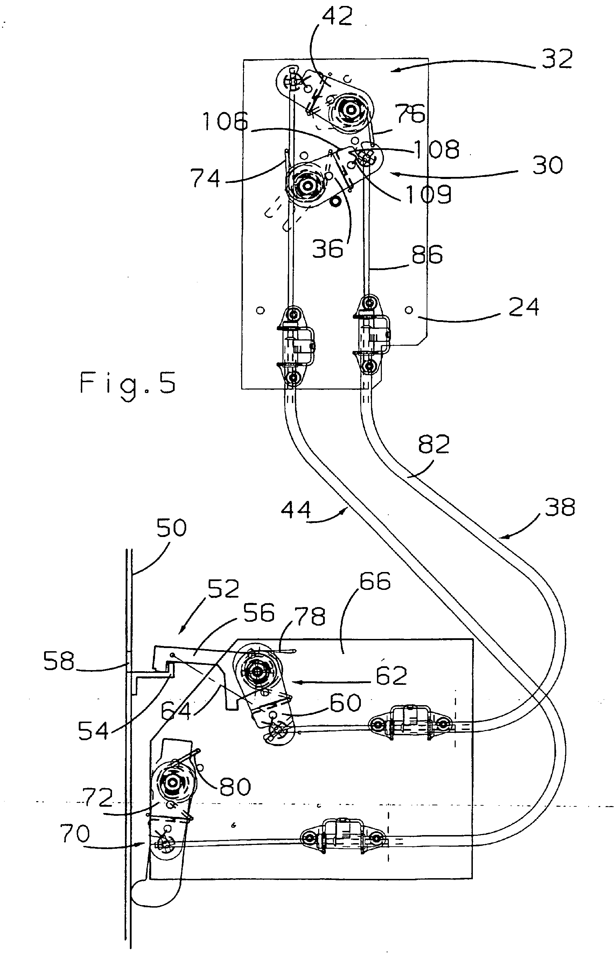

Dans la position de la figure 3, le levier de transmission 30 reflète la position ouverte du barreau de commutation. La porte 50 est ouverte, de sorte que le levier 70 se trouve dans la position de la figure 3, du fait de la prépondérance du ressort 80 sur le ressort 76. De ce fait, le verrou du mécanisme d'entraînement du barreau de commutation du disjoncteur est en position verrouillée et le mécanisme d'entraînement ne peut agir sur le barreau. Lorsque la porte 50 est refermée dans la position de la figure 4 et maintenue dans cette position par un verrou principal non représenté sur la figure, le levier 70 est repoussé par le battant de la porte 50, de sorte que le levier 32, sous la force de son propre ressort de torsion 76, prend la position de déverrouillage de la figure 4. Il devient alors possible d'actionner le mécanisme d'entraînement et de refermer l'appareil. Si un ordre de fermeture de l'appareil est donné, par des moyens extérieurs non décrit, le barreau de commutation pivote et entraîne le levier de transmission 30 dans la position de la figure 5. L'âme 86 du câble 38 transmet ce mouvement au levier 62 qui prend la position de la figure 5. Le loquet 56, sollicité par le ressort de traction 64, pénètre dans le mentonnet 54 et bloque la porte 50, de sorte que la porte 50 reste verrouillée tant que les pôles du disjoncteur sont fermés. Il reste possible de frauder le dispositif de sécurité en introduisant un outil dans l'orifice 58, pour déplacer le loquet 56 contre la force du ressort de traction 64, le levier 62 restant immobile.

Le câble de transmission 38 réalise ainsi un interverrouillage entre le levier 30 du disjoncteur et le levier 62 du mécanisme de la porte, dans lequel le levier 30 est maître et le levier 62 est esclave. Parallèlement, le câble de transmission 44 réalise un interverrouillage entre le levier 32 du disjoncteur et le levier 70 du mécanisme de la porte, dans lequel le levier 70 est maître et le levier 32 est esclave. L'ensemble de ces deux interverrouillages réalise un interverrouillage entre le disjoncteur 10 et la porte 50.

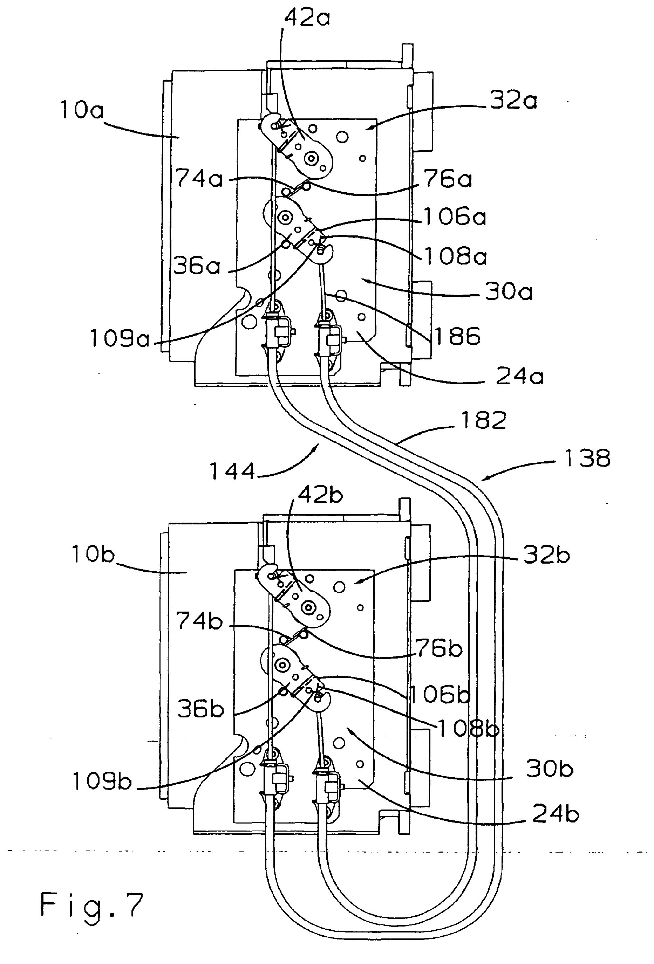

Un deuxième mode de réalisation de l'invention est illustré par la figure 7, qui représente schématiquement deux platines identiques 24a et 24b, supportées chacune par un disjoncteur 10a, lOb, et reliées entre elles par deux câbles d'interverrouillage 138, 144 selon l'invention. Par analogie avec le premier mode de réalisation, les numéros de référence des pièces correspondant à celles du premier mode ont été repris, avec l'adjonction de la lettre " a " pour le premier disjoncteur, et de la lettre " b " pour le second. Le câble 138, comportant la gaine 182 protégeant l'âme 186, relie le levier de transmission 30a au levier de transmission 32b, alors que le câble 144 relie le levier 32a au levier 30b. Les ressorts 76a, 76b et 74a, 74b sont tous identiques. Dans la position représentée sur la figure 7, les deux disjoncteurs 10a et lOb sont ouverts, et il est possible de fermer indifféremment l'un ou l'autre disjoncteur. Si l'on ferme l'appareil 10a, le levier 30a pivote dans le sens inverse des aiguilles d'une montre et entraîne le levier 32b, qui pivote dans le sens inverse des aiguilles d'une montre et ouvre l'appareil 10b. Tant que le disjoncteur 10a est fermé, le disjoncteur lOb reste verrouillé en position d'ouverture du fait de la position imposée au levier 32b. De manière identique, lorsqu'à partir de la position de la figure 7, on ferme le disjoncteur lOb, le disjoncteur 10a est verrouillé en position ouverte, car le levier 30b entraîne le levier 32a en position verrouillée, c'est-à-dire dans la position interdisant au mécanisme du disjoncteur 10a d'agir sur le barreau de commutation de ce disjoncteur. Ainsi, l'interverrouillage global réalisé permet de subordonner la fermeture d'un appareil à l'ouverture préalable de l'autre. Les deux disjoncteurs ne peuvent pas se trouver simultanément en position fermée.

Naturellement, l'invention n'est pas restreinte aux exemples de réalisation ci-dessus. Les lames ressorts 106 et 120 peuvent être remplacées par tout autre type d'organe élastique adéquat. Par exemple, il est possible d'envisager un organe élastique comportant un crochet rigide de retenue, sollicité par un ressort. Il est également possible d'envisager un embout de gaine dont la paroi cylindrique externe puisse se déformer élastiquement, coopérant avec une gorge en goulot dont le fond constitue un logement aux dimensions de l'embout non sollicité, relié à l'embouchure par un col plus étroit que le diamètre de l'embout.

La structure en U des supports de gaine avec deux flasques parallèles munis de gorges coopérant avec un cylindre constituant l'embout peut être inversée, en utilisant un embout de gaine muni de deux pattes comportant chacune une gorge, cet embout venant s'enficher sur un support cylindrique solidaire du châssis de l'appareillage électrique. Par ailleurs, il est possible également de ne prévoir qu'un flasque, présentant une gorge dont les rebords coopèrent avec une gorge annulaire de l'embout de gaine, cette dernière étant plus profonde que celle de l'exemple ci-dessus, afin de limiter le pivotement de la gaine.

La fixation des câbles est applicable non seulement à l'interverrouillage entre un appareillage électrique de coupure et une porte, ou à l'interverrouillage entre plusieurs appareillages de coupure, mais également à l'interverrouillage entre un appareillage de coupure et une télécommande mécanique.

L'interverrouillage peut être utilisé non seulement pour interverrouiller un disjoncteur, mais également pour interverrouiller tout autre type d'appareillage électrique de coupure ayant les mêmes contraintes d'encombrement.

## Revendications

1. Installation comportant au moins un appareillage électrique de coupure (10 ; 10a) et un câble (38 ; 138) de transmission cinématique destiné à interverrouiller un organe mobile (30 ; 30a) de l'appareillage électrique avec un mécanisme extérieur à l'appareillage (62 ; 32b), l'appareillage électrique de coupure comportant un châssis, le câble de transmission cinématique comportant une gaine flexible (82 ; 182) et une âme (86 ; 186) apte à coulisser dans la gaine, la gaine flexible comportant un tronçon d'extrémité constituant une première partie du câble fixée par rapport au châssis de l'appareillage électrique par un premier moyen de fixation, l'âme comportant un tronçon d'extrémité (88) extérieur à la gaine, constituant une deuxième partie du câble fixée au premier organe mobile (30, 30a) par un deuxième moyen de fixation, **caractérisé en ce que** l'un au moins des moyens de fixation comporte un embout (90 ; 124) coopérant avec la partie correspondante du câble, un logement (104 ; 116, 118) apte à recevoir l'embout, et des moyens de verrouillage à dépassement de point mort (106 ; 120), aptes à s'opposer à l'insertion de l'embout dans le logement lorsque la force exercée sur les moyens de verrouillage dans un sens d'insertion reste inférieure à un seuil d'insertion et à permettre l'insertion de l'embout dans le logement lorsque la force exercée sur les moyens de verrouillage dans un sens d'insertion est supérieure au seuil d'insertion.

2. Installation selon la revendication 1, **caractérisée en ce que** lesdits moyens de verrouillage (106 ;120) sont aptes à s'opposer à ce que l'embout soit extrait du logement (104 ; 116, 118) lorsque la force exercée sur les moyens de verrouillage dans un sens d'extraction reste inférieure à un seuil d'extraction et à permettre que l'embout soit extrait du logement lorsque la force exercée sur les moyens de verrouillage dans un sens d'extraction est supérieure au seuil d'extraction.

3. Installation selon l'une quelconque des revendications précédentes, **caractérisée en ce que** le logement (104 ; 116, 118) est constitué par deux encoches (104 ; 116, 118) pratiquées dans deux flasques parallèles (102 ; 112) d'un support (30 ; 110).

4. Installation selon l'une quelconque des revendications précédentes, **caractérisée en ce que** les moyens de verrouillage comportent un organe de verrouillage (109 ; 123) apte à prendre une position de déverrouillage permettant d'insérer l'embout dans le logement et une position de verrouillage empêchant d'extraire l'embout du logement, et un moyen de rappel élastique (108 ; 122) rappelant l'organe de verrouillage vers sa position de verrouillage, l'embout coopérant avec le moyen de rappel élastique de telle manière que l'organe de verrouillage s'efface élastiquement vers sa position de déverrouillage lors de l'insertion en force de l'embout dans le logement.

5. Installation selon la revendication 4, **caractérisée en ce que** le moyen de rappel élastique coopère avec l'embout de telle manière que l'organe de verrouillage s'efface élastiquement vers sa position de déverrouillage lorsque l'embout est extrait en force du logement.

6. Installation selon l'une quelconque des revendications 4 ou 5, **caractérisée en ce que** l'organe de rappel élastique est un ressort agissant directement sur l'embout.

7. Installation selon la revendication 6, **caractérisée en ce que** le ressort est muni d'une première rampe et d'une deuxième rampe conformées de telle manière que la première rampe est apte à coopérer avec l'embout pour effacer l'organe de rappel élastique lors de l'insertion de l'embout, la deuxième rampe étant apte à coopérer avec l'embout pour maintenir celui-ci en position dans son logement.

8. Installation selon la revendication 7, **caractérisée en ce que** la deuxième rampe est telle qu'elle est apte à coopérer avec l'embout pour effacer l'organe de rappel élastique lors de l'extraction.

9. Installation selon la revendication 8, **caractérisée en ce que** la première et la deuxième rampe sont conformées de telle manière que le seuil de force d'extraction est plus faible que le seuil de force d'insertion.

10. Installation selon l'une quelconque des revendications précédentes, **caractérisée en ce que** le premier et le deuxième moyens comportent chacun un embout (90 ;124) coopérant avec la partie correspondante du câble, un logement (104 ; 116, 118) apte à recevoir l'embout, et des moyens de verrouillage à dépassement de point mort (106 ; 120), aptes à s'opposer à l'insertion de l'embout dans le logement lorsque la force exercée sur les moyens de verrouillage dans un sens d'insertion reste inférieure à un seuil d'insertion et à permettre l'insertion de l'embout dans le logement lorsque la force exercée sur les moyens de verrouillage dans un sens d'insertion est supérieure au seuil d'insertion.

## Claims

1. Installation comprising at least one electrical switchgear apparatus (10; 10a) and a kinematic transmission cable (38; 138) designed to interlock a movable means (30; 30a) of the electrical switchgear apparatus with a mechanism external to the apparatus (62; 32b), the electrical switchgear apparatus comprising a frame, the kinematic transmission cable comprising a flexible sheath (82; 182) and a core (86; 186) able to slide in the sheath, the flexible sheath comprising an end section constituting a first part of the cable fixed with respect to the frame of the electrical switchgear apparatus by a first fixing means, the core comprising an end section (88) external to the sheath constituting a second part of the cable fixed to the first movable means (30, 30a) by a second fixing means, **characterized in that** at least one of the fixing means comprises an end-piece (90; 124) operating in conjunction with the corresponding part of the cable, a housing (104; 116, 118) designed to receive the end-piece, and locking means with dead point passage (106; 120) designed to oppose insertion of the end-piece in the housing when the force exerted on the locking means in an insertion direction remains lower than an insertion threshold and to enable insertion of the end-piece in the housing when the force exerted on the locking means in an insertion direction is greater than the insertion threshold.

2. Installation according to claim 1, **characterized in that** said locking means (106; 120) are able to oppose the end-piece from being extracted from the housing (104; 116, 118) when the force exerted on the locking means in an extraction direction remains lower than an extraction threshold and to enable the end-piece to be extracted from the housing when the force exerted on the locking means in an extraction direction is greater than the extraction threshold.

3. Installation according to either one of the foregoing claims, **characterized in that** the housing (104; 116, 118) is formed by two notches (104; 116, 118) made in two parallel flanges (102; 112) of a support (30; 110).

4. Installation according to any one of the foregoing claims, **characterized in that** the locking means comprise a locking part (109; 123) able to take an unlocking position enabling the end-piece to be inserted in the housing and a locking position preventing the end-piece from being extracted from the housing, and a flexible return means (108; 122) urging the locking part to its locking position, the end-piece operating in conjunction with the flexible return means in such a way that the locking part is flexibly removed to its unlocking position when the end-piece is forcibly inserted in the housing.

5. Installation according to claim 4, **characterized in that** the flexible return means operates in conjunction with the end-piece in such a way that the locking part is flexibly removed to its unlocking position when the end-piece is forcibly extracted from the housing.

6. Installation according to either one of the claims 4 or 5, **characterized in that** the flexible return means is a spring acting directly on the end-piece.

7. Installation according to claim 6, **characterized in that** the spring is provided with a first ramp and a second ramp shaped in such a way that the first ramp is able to operate in conjunction with the end-piece to clear the flexible return means when the end-piece is inserted, the second ramp being designed to operate in conjunction with the end-piece to hold the latter in position in its housing.

8. Installation according to claim 7, **characterized in that** the second ramp is such that it is able to operate in conjunction with the end-piece to clear the flexible return means when extraction is performed.

9. Installation according to claim 8, **characterized in that** the first and second ramp are shaped in such a way that the extraction force threshold is lower than the insertion force threshold.

10. Installation according to any one of the foregoing claims, **characterized in that** the first and second means each comprise an end-piece (90; 124) operating in conjunction with the corresponding part of the cable, a housing (104; 116, 118) designed to receive the end-piece, and locking means with dead point passage (106; 120) designed to oppose insertion of the end-piece in the housing when the force exerted on the locking means in an insertion direction remains lower than an insertion threshold and to enable insertion of the end-piece in the housing when the force exerted on the locking means in an insertion direction is greater than the insertion threshold.

## Patentansprüche

1. Installation, die mindestens ein elektrisches Schaltgerät (10; 10a) und einen Seilzug (38; 138) zur Bewegungsübertragung umfasst, der dazu dient, die gegenseitige mechanische Verriegelung zwischen einem beweglichen Teil (30; 30a) des elektrischen Schaltgeräts und einem außerhalb des Schaltgeräts angeordneten Mechanismus (62; 32b) zu gewährleisten, wobei das elektrische Schaltgerät ein Chassis umfasst, der Seilzug zur Bewegungsübertragung eine biegsame Umhüllung (82; 182) und einen in der Umhüllung verschiebbaren Kemdraht (86; 186) umfasst, die biegsame Umhüllung einen Endabschnitt umfasst, der einen mit einem ersten Befestigungsmittel relativ zum Chassis des elektrischen Schaltgerätes befestigten ersten Abschnitt des Seilzugs bildet, und der Kerndraht einen aus der Umhüllung herausstehenden Endabschnitt (86) umfasst, der einen mit einem zweiten Befestigungsmittel am ersten beweglichen Teil (30; 30a) befestigten zweiten Abschnitt des Seilzugs bildet, **dadurch gekennzeichnet**, das mindestens eines der Befestigungsmittel ein Endstück (90, 124) umfasst, das mit dem entsprechenden Abschnitt des Seilzugs, einer zur Einführung des Endstücks dienenden Lageraufnahme (104; 116, 118) sowie mit Verriegelungsmitteln mit Totpunktüberwindung (106; 120) zusammenwirkt, die dazu ausgelegt sind, dem Einsetzen des Endstücks in die Lageraufnahme entgegenzuwirken, wenn die in einer Einführungsrichtung auf die Verriegelungsmittel ausgeübte Kraft unter einem Einführschwellwert bleibt, und das Einsetzen des Endstücks in die Lageraufnahme zu ermöglichen, wenn die in einer Einführungsrichtung auf die Verriegelungsmittel ausgeübte Kraft größer ist als der Einführschwellwert.

2. Installation nach Anspruch 1, **dadurch gekennzeichnet, dass** die genannten Verriegelungsmittel (106; 120) dazu ausgelegt sind, dem Herausziehen des Endstücks aus der Lageraufnahme (104 ; 116, 118) entgegenzuwirken, wenn die in einer Abzugsrichtung auf die Verriegelungsmittel ausgeübte Kraft unter einem Abzugsschwellwert bleibt, und das Herausziehen des Endstücks aus der Lageraufnahme zu erlauben, wenn die in einer Abzugsrichtung auf die Verriegelungsmittel ausgeübte Kraft über dem Abzugsschwellwert liegt.

3. Installation nach irgendeinem der vorhergehenden Ansprüche, **dadurch gekennzeichnet, dass** die Lageraufnahme (104 ; 116, 118) aus zwei Aussparungen (104 ; 116, 118) besteht, die in zwei parallel zueinander angeordneten Schenkeln (102 ; 112) einer Halterung (30 ; 110) ausgebildet sind.

4. Installation nach irgendeinem der vorhergehenden Ansprüche, **dadurch gekennzeichnet, dass** die Verriegelungsmittel ein Verriegelungsorgan (109; 123), das dazu ausgelegt ist, eine Entriegelungsstellung, in der das Endstück in die Lageraufnahme eingesetzt werden kann, sowie eine Verriegelungsstellung einzunehmen, in der ein Herausziehen des Endstücks aus der Lageraufnahme verhindert wird, und ein elastisches Rückstellmittel (108; 122) umfassen, welches das Verriegelungsorgan in Richtung seiner Verriegelungsstellung beaufschlagt, wobei das Endstück mit dem elastischen Rückstellmittel so zusammenwirkt, dass das Verriegelungsorgan bei der kraftunterstützten Einführung des Endstücks in die Lageraufnahme elastisch in Richtung seiner Entriegelungsstellung weggedrückt wird.

5. Installation nach Anspruch 4, **dadurch gekennzeichnet, dass** das elastische Rückstellmittel mit dem Endstück so zusammenwirkt, dass das Verriegelungsorgan beim kraftunterstützten Herausziehen des Endstücks aus der Lageraufnahme elastisch in Richtung seiner Entriegelungsstellung weggedrückt wird.

6. Installation nach irgendeinem der Ansprüche 4 oder 5 , **dadurch gekennzeichnet, dass** das elastische Rückstellorgan als direkt auf das Endstück wirkende Feder ausgebildet ist.

7. Installation nach Anspruch 6, **dadurch gekennzeichnet, dass** an der Feder eine erste Schräge und eine zweite Schräge ausgebildet sind, die so geformt sind, dass die erste Schräge mit dem Endstück zusammenwirkt, um das elastische Rückstellmittel beim Einführen des Endstücks wegzudrücken und dass die zweite Schräge mit dem Endstück zusammenwirkt, um dieses in seiner Stellung in der Lageraufnahme zu halten.

8. Installation nach Anspruch 7, **dadurch gekennzeichnet, dass** die zweite Schräge so ausgebildet ist, dass sie mit dem Endstück zusammenwirkt, um das elastische Rückstellmittel beim Herausziehen wegzudrücken.

9. Installation nach Anspruch 8, **dadurch gekennzeichnet, dass** die erste und die zweite Schräge so geformt sind, dass der Schwellwert der Abzugskraft kleiner ist als der Schwellwert der Einführkraft.

10. Installation nach irgendeinem der vorhergehenden Ansprüche, **dadurch gekennzeichnet, dass** die ersten und die zweiten Mittel jeweils ein, mit dem entsprechenden Abschnitt des Seilzugs zusammenwirkendes Endstück (90 ;124), eine zur Einführung des Endstücks dienende Lageraufnahme (104; 116, 118) sowie Verriegelungsmittel mit Totpunktüberwindung (106 ; 120) umfassen, die dazu ausgelegt sind, dem Einsetzen des Endstücks in die Lageraufnahme entgegenzuwirken, wenn die in einer Einführungsrichtung auf die Verriegelungsmittel ausgeübte Kraft unter einem Einführschwellwert bleibt, sowie das Einsetzen des Endstücks in die Lageraufnahme zu erlauben, wenn die in einer Einführungsrichtung auf die Verriegelungsmittel ausgeübte Kraft über dem Einführschwellwert liegt.
